# EUROPÄISCHE PATENTANMELDUNG

(11) **EP 2 039 233 A1**
(43) Veröffentlichungstag der Anmeldung: **25.03.2009**
(21) Anmeldenummer: 08015985.8
(22) Anmeldetag: 11.09.2008
(51) Int. Cl.: A01C 7/08, A01C 7/10, A01C 7/06

(54) **Zentraldosierer**

(30) Priorität: 22.09.2007 DE 102007045358
(71) Anmelder: Amazonen-Werke H. Dreyer GmbH & Co. KG, 49205 Hasbergen (DE)
(72) Erfinder: Paulsen, Sven, 27798 Hude (DE); Tiessen, Reimer Uwe, 26135 Oldenburg (DE); Pokriefke, Michael, 27798 Hude (DE)

(57) **Zusammenfassung**

Zentraldosierer (1) für eine pneumatische Verteilmaschine mit zumindest einem in einem Gehäuse, welches unter zumindest einem Vorratsbehälter (3) angeordnet ist, angeordneten drehbar angetriebenen und vorzugsweise als Zellenrad (6) ausgebildeten Dosierorgan (7) und zumindest einer oberhalb des Dosierorgans (7) angeordneten Absperreinrichtung, mittels der die Zufuhr des sich im Vorratsbehälter (3) befindlichen Materials zu dem mindestens einen Zellenrad (6) absperrbar ist, wobei die Dosierorgane (7) das sich im Vorratsbehälter (3) befindliche Material über Schleusen in zumindest eine Förderleitung (2) einspeisen, um den Zentraldosierer (1) für die Ausbringung von zwei Materialsorten über eine Förderleitung (2) weiter zu entwickeln. ist vorgesehen, dass der Förderleitung (2) zwei in Förderrichtung hintereinander angeordnete Dosierorgane (7) zugeordnet sind.

## Beschreibung

Die Erfindung betrifft einen Zentraldosierer gemäß des Oberbegriffes des Patentanspruches 1.

Ein derartiger Zentraldosierer ist beispielsweise durch die EP 15 70 716 A2 bekannt. Bei diesen Zentraldosierern ist es üblich, zwischen dem Zellenrad und dem Vorratsbehälter einschiebbare Absperrschieber anzuordnen, um auch bei einem mit dem auszubringenden Material gefüllten Vorratsbehälter das Zellenrad herausnehmen zu können, um das Dosierorgan zu reinigen oder das Zellenrad gegen ein anders ausgebildetes Zellenrad austauschen zu können. Dieser Zentraldosierer ist einem Vorratsbehälter zugeordnet und dosiert das sich im Vorratsbehälter befindliche Material, hier Saatgut, über eine Schleuse, in eine unterhalb des Vorratsbehälters angeordnete pneumatisch beaufschlagte Förderleitung, über welche das Material einem Verteilerkopf zugeleitet wird. Von dem Verteilerkopf aus wird das Material auf einzelne, zu Säscharen führende Saatleitungen aufgeteilt.

Durch die DE 199 21 978 A1 ist eine Verteilmaschine mit zwei Vorratsbehältern für die Aufnahme von verschiedenen Materialien, wie Dünger und Saatgut bekannt. Jedem Vorratsbehälter ist ein Zentraldosierer zugeordnet. Unterhalb jedes Zentraldosierers ist eine pneumatisch beaufschlagte Förderleitung angeordnet, in die der jeweilige Zentraldosierer das sich in dem jeweiligen Vorratsbehälter befindliche Material (in dem einen Vorratsbehälter befindet sich Saatgut, in dem anderen Vorratsbehälter befindet sich Dünger) eingespeist wird. Diese Förderleitungen werden über eine Vermischungshose zu einem Steigrohr eines Verteilerkopfes zusammengeführt. Diese Anordnung ist sehr aufwendig, um gleichzeitig über einen Verteilerkopf Saatgut und Dünger ausbringen zu können, damit das Saatgut-Düngergemisch über eine Saatleitung einer als Säschar ausgebildeten Ablageeinrichtung zugeführt werden kann.

Der Erfindung liegt die Aufgabe zugrunde, den Zentraldosierer für die Ausbringung von zwei Materialsorten über eine Förderleitung unter Beibehaltung der Vorteile des gattungsgemäßen Zentraldosierers weiter zu entwickeln.

Diese Aufgabe wird erfindungsgemäß dadurch gelöst, dass der Förderleitung zwei in Förderrichtung hintereinander angeordnete Dosierorgane des Zentraldosierers zugeordnet sind. Infolge dieser Maßnahmen wird durch die beiden hintereinander angeordneten Dosierorgane des Zentraldosierers die beiden verschiedenen Materialien, nämlich Saatgut und Dünger oder bei sehr großen in Förderleitung einzuspeisenden Massenströme bei der Ausbringung einer Materialsorte ein kompakt ausgestalteter Zentraldosierer in einfacher Weise geschaffen.

Um bei einem derartig kompakt ausgebildeten Zentraldosierer, der zwei in Förderrichtung hintereinander angeordnete Dosierorgane des Zentraldosierers aufweist, die Materialzufuhr des Vorratsbehälters zu dem als Zellenrädern ausgebildeten Dosierorgan absperren zu können, um die Ausbringung des Materials über zumindest ein Dosierorgan zu unterbrechen bzw. die Möglichkeit des Austausches eines Zellenrades gegen ein anders ausgestaltetes Zellenrad bei gefülltem Vorratsbehälter zu haben, ist in einer ersten Ausführungsvariante vorgesehen, dass die Absperreinrichtung als ein parallel zur Förderrichtung verschiebbarer Schieber ausgebildet ist, dass mittels des Schiebers wahlweise die Materialzufuhr zu einem der beiden einer Förderleitung zugeordneten Zellenräder abdeckbar oder die Materialzufuhr zu den beiden einer Förderleitung zugeordneten Zellenräder gleichzeitig freigebbar ist.

Diese Lösung wird bevorzugt, wenn die hintereinander angeordneten Dosierorgane des Zentraldosierers in einem größeren Abstand zueinander angeordnet sind und der Schieber, wenn er beide Dosierorgane freigibt und nicht zum Vorratsbehälter absperrt, zwischen die hintereinander angeordneten Dosierorgane bzw. deren Zellenräder sich befinden kann. Dies bedeutet also, dass die Dosierorgane in einem derartigen Abstand hintereinander und zueinander angeordnet sind, dass dieser Abstand größer ist als die Länge des Absperrschiebers.

In einer anderen Ausführungsform ist vorgesehen, dass die Absperreinrichtung als parallel zur Förderrichtung verschiebbarer Schieber ausgebildet ist, dass mittels des Schiebers die Materialzufuhr zu den beiden einer Förderleitung zugeordneten Zellenräder gleichzeitig abdeckbar oder die Materialzufuhr zu den beiden einer Förderleitung zugeordneten Zellenräder gleichzeitig freigebbar ist. Diese Lösung bietet sich an, wenn einerseits die Dosierorgane bzw. deren Zellenräder dichter zueinander angeordnet sind als bei der ersten Ausführungsform und gleichzeitig mit einer Absperreinrichtung die Absperrung beider hintereinander angeordneter Dosierorgane erfolgen soll oder eine Freigabe, d. h. einen freien Durchfluss des Materials vom Vorratsbehälter zu den Dosierorganen gewährleistet sein soll. Dies lässt sich dadurch verwirklichen, dass in dem Schieber eine Durchlassöffnung, durch welche das Material zu dem einem Zellenrad strömen kann, wenn die Materialzufuhr zu den beiden einer Förderleitung zugeordneten Zellenrädern gleichzeitig frei zugeben ist, angeordnet ist.

In einer weiteren Ausführungsform ist vorgesehen, dass die Absperreinrichtung als zwei gleichzeitig über eine Verstelleinrichtung parallel zur Fördereinrichtung verschiebbare Schieber ausgebildet ist, dass die beiden Schieber parallel zur Förderrichtung verschiebbar sind, dass mittels der Schieber die Materialzufuhr zu den beiden einer Förderleitung zugeordneten Zellenrädern gleichzeitig abdeckbar oder die Materialzufuhr zu den beiden einer Förderleitung zugeordneten Zellenräder gleichzeitig freigebbar ist. Infolge dieser Maßnahme kann mittels einer einzigen Betätigungsvorrichtung die jeweils dem jeweiligen hintereinander angeordneten Dosierorgan zugeordnete Absperreinrichtung gleichzeitig betätigt werden, um so eine gleichzeitige Absperrung sowie einen gleichzeitigen freien Materialdurchfluss zu erreichen.

Weitere Einzelheiten der Erfindung sind den übrigen Unteransprüchen, der Beispielsbeschreibung und den Zeichnungen zu entnehmen. Hierbei zeigen
- Fig. 1: den Zentraldosierer, unterhalb eines trichterfömigen Vorratsbehälters angeordnet, mit sich in Absperrposition befindlichen Absperrschiebern in Seitenansicht und in Prinzipdarstellung,
- Fig. 2: den Zentraldosierer in perspektivischer Darstellung, wobei die der Vorderseite zugewandten Absperrschieber sich in Absperrposition und die der Vorderansicht abgewandten Absperrschieber sich in den Materialfluss freigebender Stellung befinden gemäß Fig. 1,
- Fig. 3: den Zentraldosierer in der Draufsicht entsprechend Fig. 2,
- Fig. 4: einen weiteren Zentraldosierer in der Draufsicht,
- Fig. 5: den Zentraldosierer in der Seitenansicht gemäß Fig. 4,
- Fig. 6: den Zentraldosierer in der Ansicht VI/VI gemäß Fig. 4, wobei der Absperrschieber sich in den Materialfluss bei beiden Zellenräder freigebender Stellung befindet,
- Fig. 7: den Zentraldosierer in Seitenansicht, wobei die Absperreinrichtung nach rechts zur Absperrung des rechten Zellenrades verschoben ist,
- Fig. 8: den Zentraldosierer gemäß Fig. 7 in perspektivischer Darstellung,
- Fig. 9: ein weiteren Zentraldosierer in der Draufsicht,
- Fig. 10: den Zentraldosierer gemäß Fig. 9 in perspektivischer Darstellung,
- Fig. 11: den Zentraldosierer gemäß Fig. 9 in der Draufsicht und perspektivischer Darstellung und
- Fig. 12: den Zentraldosierer gemäß Fig. 9 in perspektivischer Darstellung entsprechend dem in Fig. 9 eingezeichneten Pfeil.

Der Zentraldosierer 1 ist für die Dosierung von sich in einem Vorratsbehälter befindlichen Material in pneumatisch beaufschlagte Förderleitungen 2 vorgesehen. Diese Förderleitungen 2 führen bei Sämaschinen jeweils zu Verteilerköpfen, von wo aus das zu verteilende Gut, entweder Saatgut oder Dünger, auf einzelne zu Ausbringeinrichtungen, wie Säscharen führenden Leitungen aufgeteilt wird.

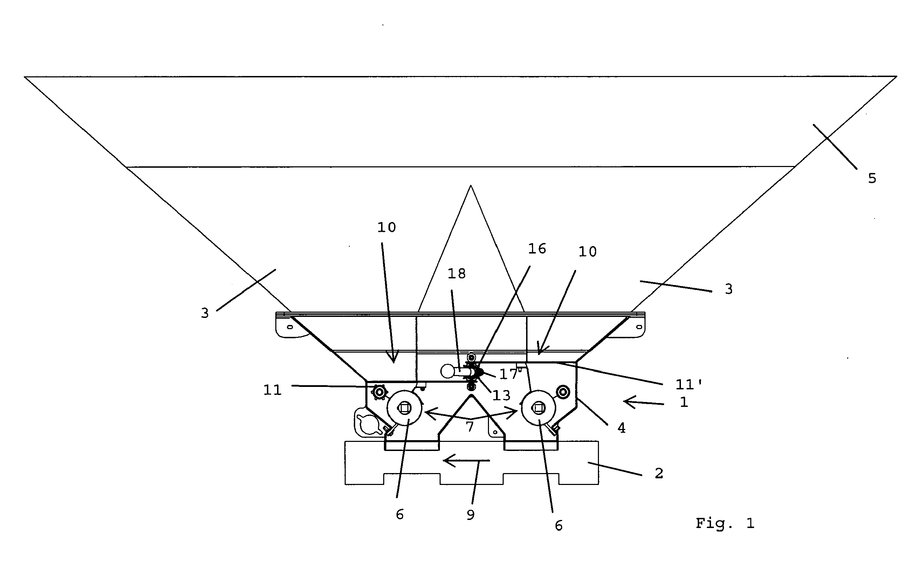

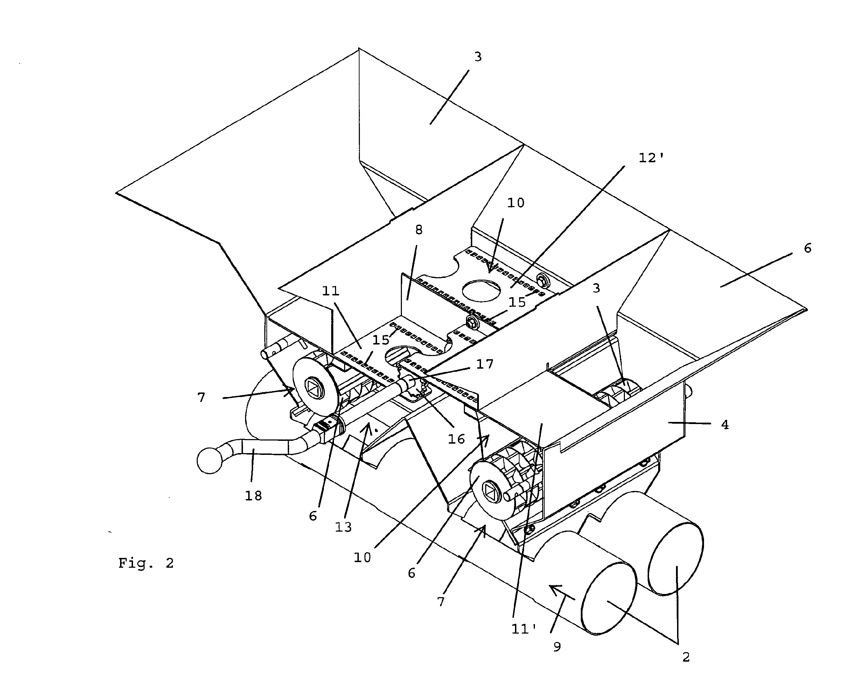

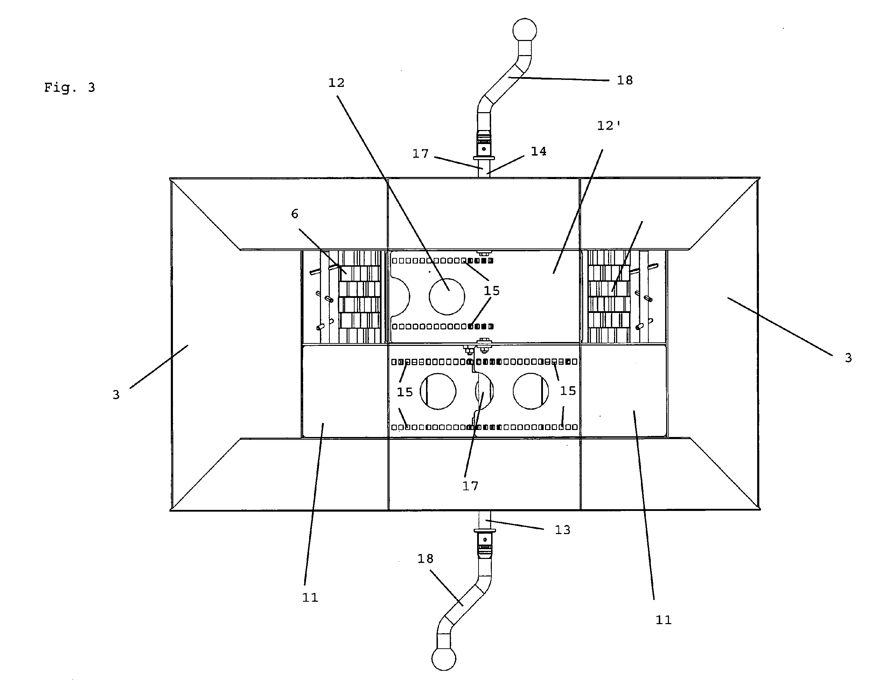

Der Zentraldosierer 1 ist an zwei Auslauftrichter 3 angeschlossen. Der Zentraldosierer 1 weist ein Gehäuse 4 auf, welches unterhalb eines Vorratsbehälters 5, der beispielsweise als Sämaschine ausgebildeten Verteilmaschine angeordnet ist. In dem Gehäuse 4 sind drehbar gelagerte und in einstellbarer Weise angetriebene und als Zellenräder 6 ausgebildete Dosierorgane 7, welches, wie im Ausführungsbeispiel durch eine Zwischenwand 8 in zwei Teilbereiche geteilt sind, angeordnet. Oberhalb des Dosierorgans 7 ist in dem Gehäuse 4 in nicht dargestellter Weise eine drehbar angetriebene Rührwelle angeordnet. Jeder Förderleitung 2 sind zwei beabstandet zueinander und in Förderrichtung 9 hintereinander als Zellenräder 6 ausgebildete Dosierorgane 7 zugeordnet. Oberhalb der als Zellenräder 6 ausgebildeten Dosierorgane 7 ist jeweils eine Absperreinrichtung 10 angeordnet. Diese Absperreinrichtung 10 weist im Ausführungsbeispiel gemäß Fig. 1 bis 3 für die jeder Förderleitung 2 zugeordneten Bereiche der Zellenräder 6 jeweils zwei unabhängig voneinander verschiebbare Absperrschieber 11, 11', 12, 12' auf. Mittels dieser als Schieber 11, 11', 12, 12' ausgebildeten Absperreinrichtung 10 ist ein Teilbereich des Dosierorgans 7, im Ausführungsbeispiel jeweils der dem Absperrschieber 11, 11', 12, 12' zugeordnete Bereich der Zellenräder 6 abdeckbar, so dass kein Material aus dem Vorratsbehälter 5 zu dem Dosierorgan 7 bzw. Zellenrädern 6 nachfließen kann.

In dem Gehäuse 4 sind die Zellenräder 6 angeordnet. Die Zellenräder 6 sind jeweils durch eine im Gehäuse 4 angeordnete Trennwand 8 in den jeweiligen einer Förderleitung 2 zugeordneten Förderbereich voneinander getrennt. Die Trennwand 8 reicht jeweils bis zu den Absperrschiebern 11, 11', 12, 12'. Die Absperrschieber 11, 11', 12, 12' können mittels der in dem Gehäuse 4 hineinragenden Stelleinrichtungen 13 und 14 verstellt werden.

Jeder Absperrschieber 11, 11', 12, 12' weist als in zwei beabstandet zueinander angeordneten Reihen zueinander beabstandete Auspaarungen 15 eingreifende Zähne 16 von zahn-und kettenradähnlichen Stellmitteln der Stelleinrichtungen 13, 14 auf. Somit wirken die Auspaarrungen 15 mit den zahn-und/oder kettenradähnlichen Stellmitteln 16 zusammen und dienen als Verstelleinrichtung 13, 14. Wie leicht auf den Zeichnungen erkennbar ist, kann durch Verdrehen der Welle 17, auf denen die zahn- oder kettenradähnlichen Stellmittel 16 drehfest angeordnet sind über eine jeweils aufsteckbare Kurbel 18 der jeweilige Absperrschieber 11, 11', 12, 12' in die jeweils gewünschte Position verschoben werden.

Gemäß Fig. 1 bis 3 sind die beiden vorderen Absperrschieber 11, 11' in den Absperrpositionen eingestellt, dargestellt, in welchem sie den Durchfluss des Materiales vom Vorratsbehälter zu dem Dosierorgan 7 verschließen.

Die hinteren Absperrschieber 12, 12' sind in eine derartige Position eingestellt, dass sie den gesamten Zuflussbereich für das Material aus dem Vorratsbehälter 5 zu dem Dosierorgan, d.h. den Zellenrädern 6 jeweils freigeben.

Somit ist also die Absperreinrichtung 10 gleichzeitig über eine Verstelleinrichtung 13, 14 parallel zur Förderrichtung 9 verschiebbare Schieber 11, 11', 12, 12' ausgebildet. Hierbei sind die beiden Schieber 11, 11', 12, 12' parallel zur Förderrichtung 9 verschiebbar. Mittels der Schieber 11, 11', 12, 12' ist die Materialzufuhr zu den beiden einer Förderleitung 2 zugeordneten Zellenräder 6 gleichzeitig abdeckbar oder die Materialzufuhr zu den beiden einer Förderleitung 2 zugeordneten Zellenräder 6 gleichzeitig freigegeben, wie vorstehend zu den Fig. 1 bis 3 beschrieben ist.

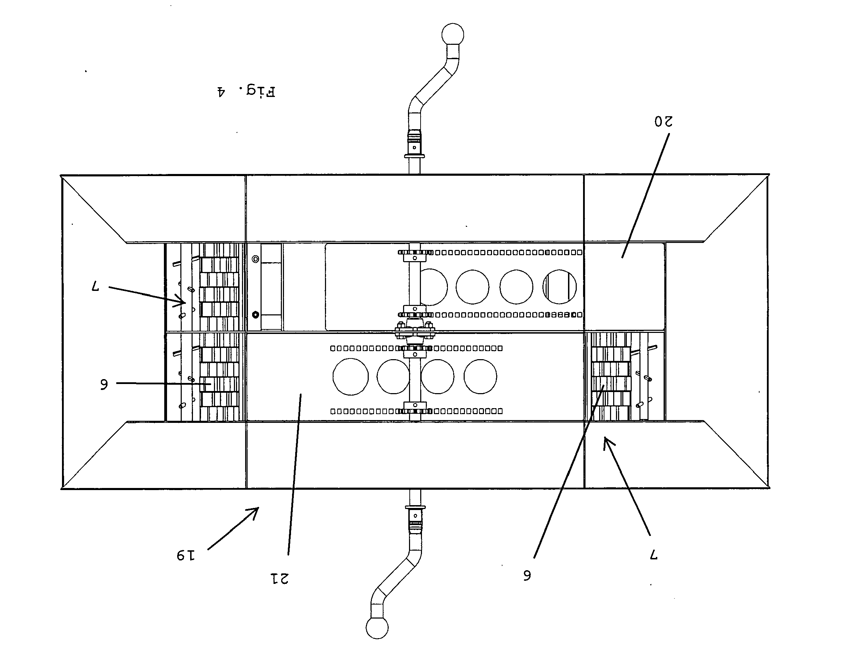

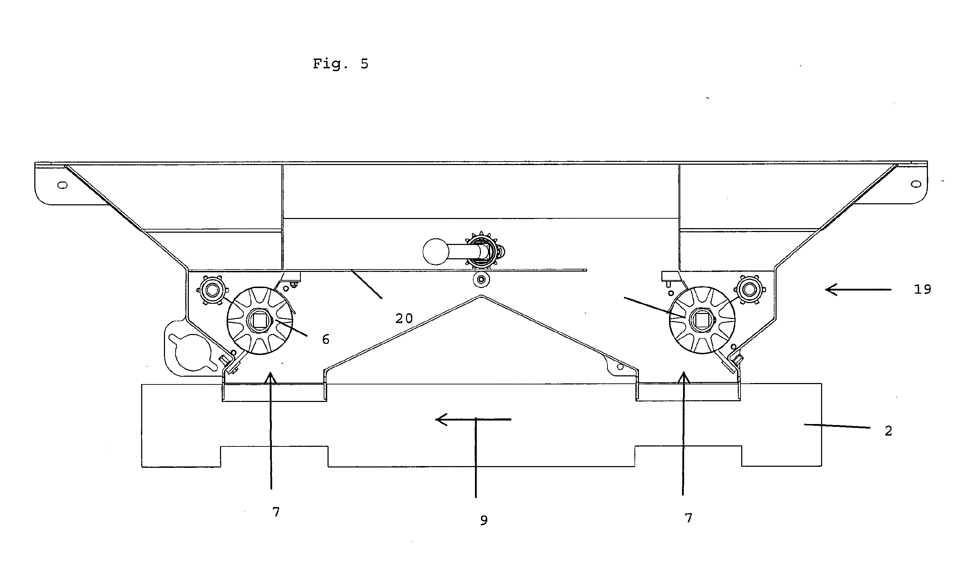

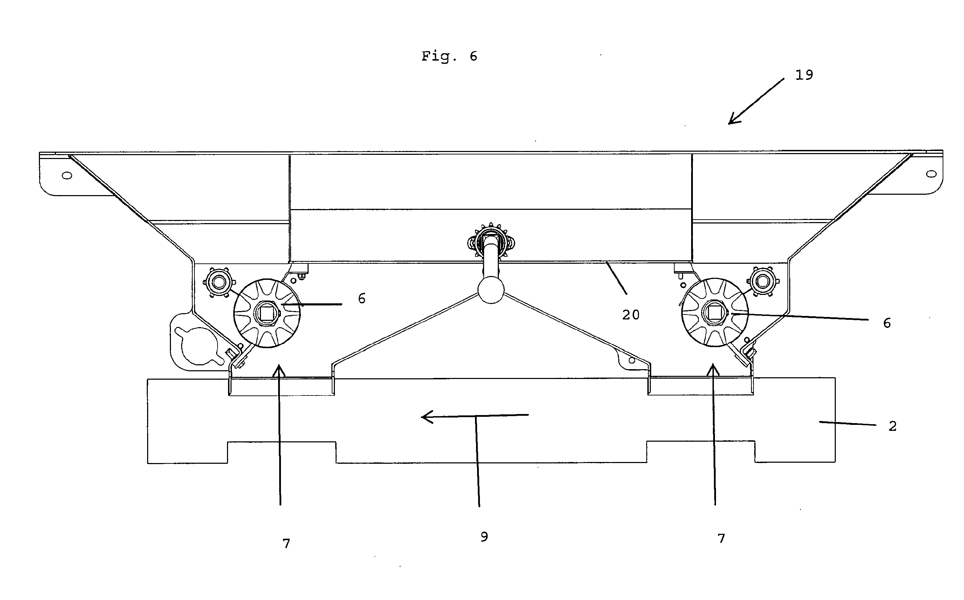

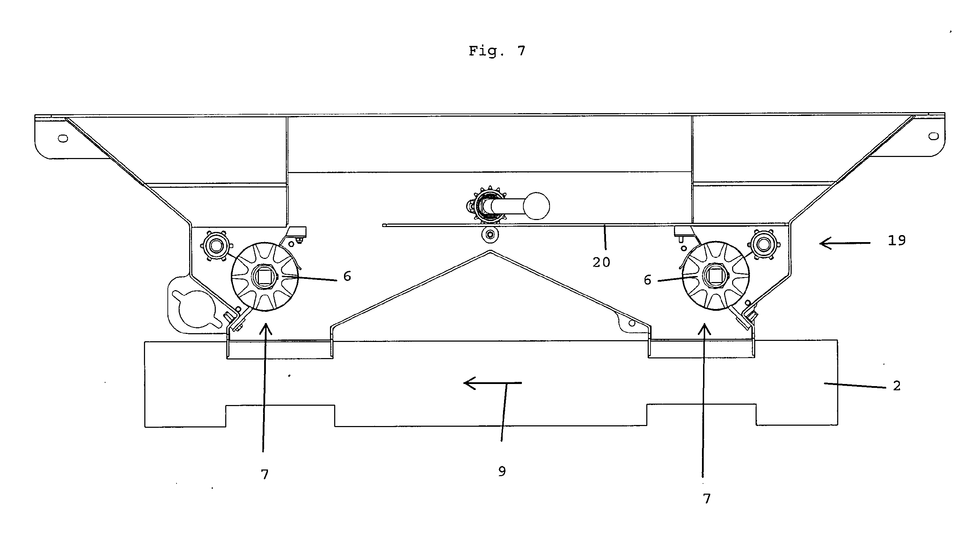

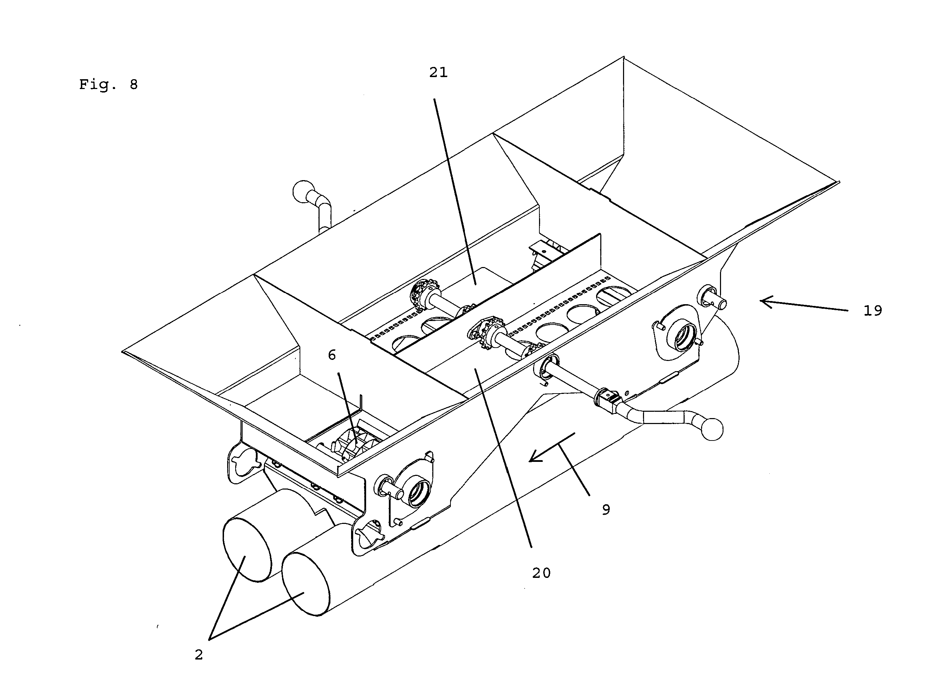

Der Zentraldosierer 19 gemäß den Fig. 4 bis 8 unterscheidet sich von dem Zentraldosierer 1 gemäß den Fig. 1 bis 3 zunächst dadurch, dass die das Dosierorgan 7 bildenden Zellenräder 6 in einem größeren Abstand zueinander angeordnet sind, und dass jeweils den einer Förderleitung 2 zugeordneten Förderbereich der Zellenräder ein gemeinsamer Absperrschieber 20, 21 zugeordnet ist. Hierbei die als Absperreinrichtung jeweils als ein parallel zur Förderrichtung 9 verschiebbarer Schieber 20, 21 ausgebildet. Mittels des jeweiligen Schiebers 20, 21 ist wahlweise die Materialzufuhr vom Vorratsbehälter zu einem der beiden Förderbereiche der eine Förderleitung 2 zugeordnete Zellenräder 6 absperrbar oder die Materialzufuhr zu den beiden einer Förderleitung 2 zugeordneten Förderbereiche eines Zellenrades 6 gleichzeitig freigebbar.

Hierbei ist der in der Zeichnung vordere Schieber 20 nach links verschoben, so dass er die Materialzufuhr zu dem Förderbereich dieses Zellenrades 6 abdeckt, während der Förderbereich des anderen Zellenrades 6 der gleichen Förderleitung 2 nicht abgedeckt und somit freigegeben ist. Der in der Zeichnung hintere Schieber 21 befindet sich in einer Mittelposition, in welcher der Materialzufluss zu den Förderbereichen der beiden der hinteren Förderleitung 2 zugeordneten Zellenräder 6 jeweils freigegeben ist.

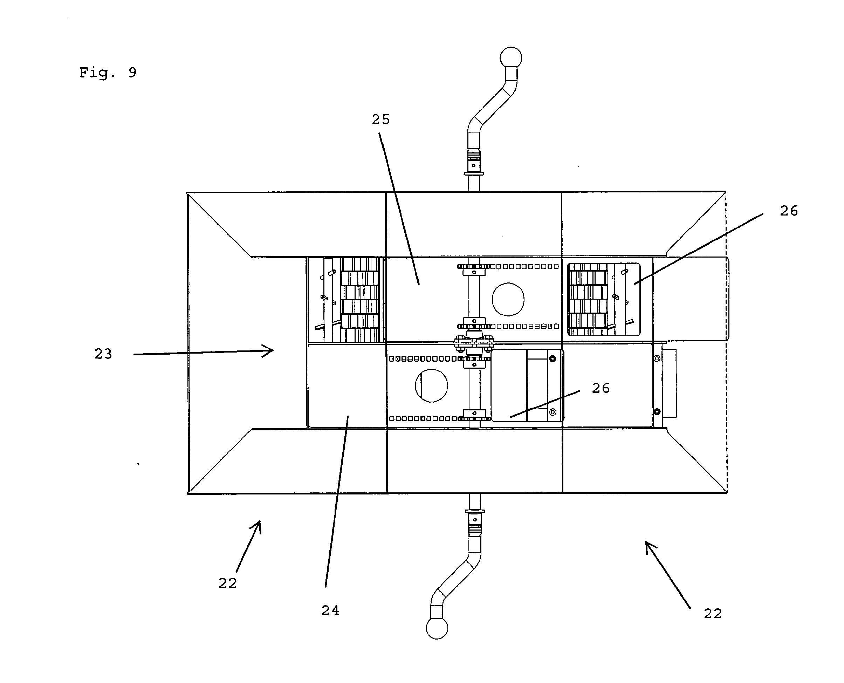

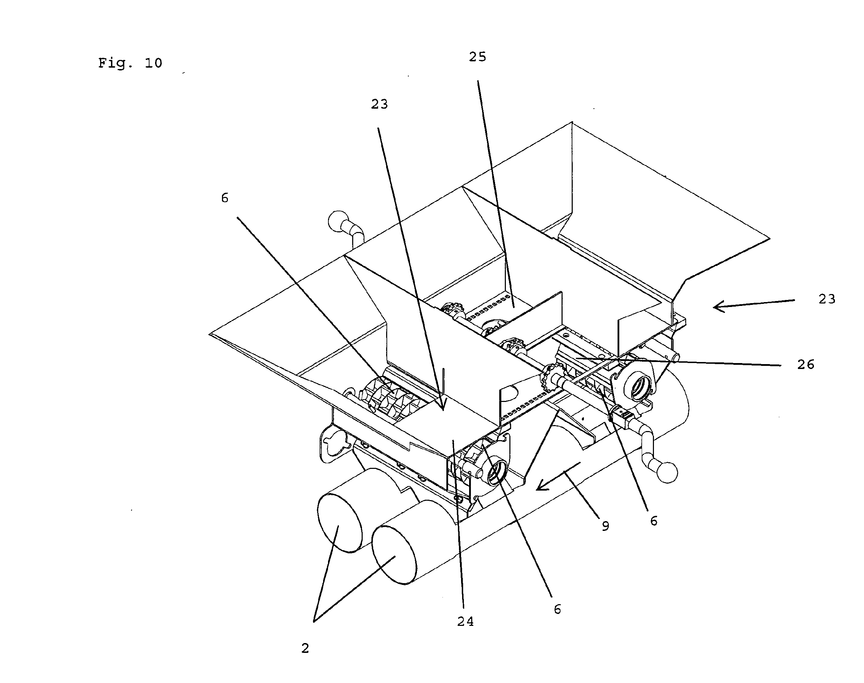

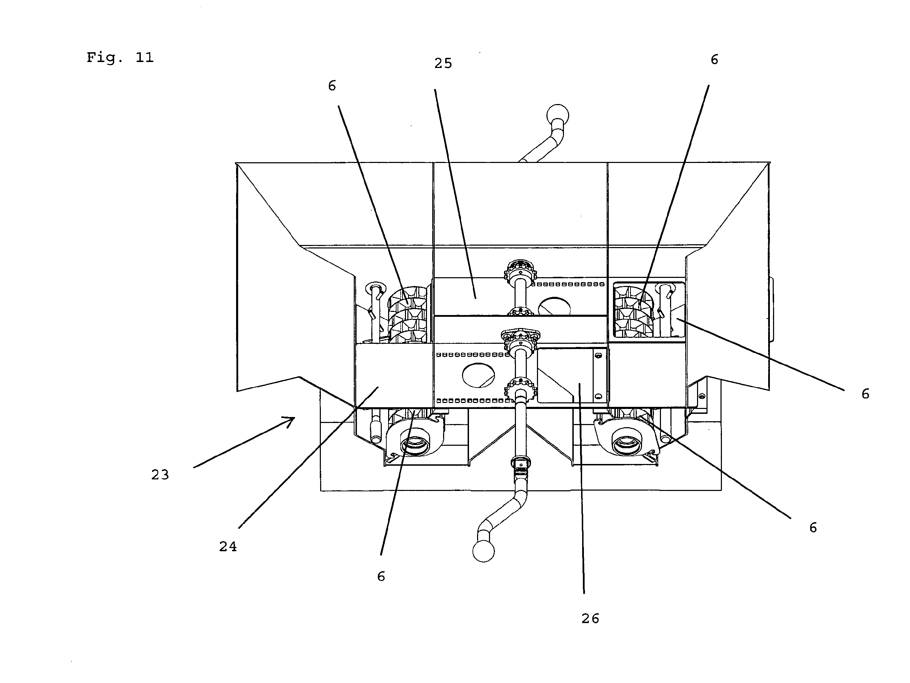

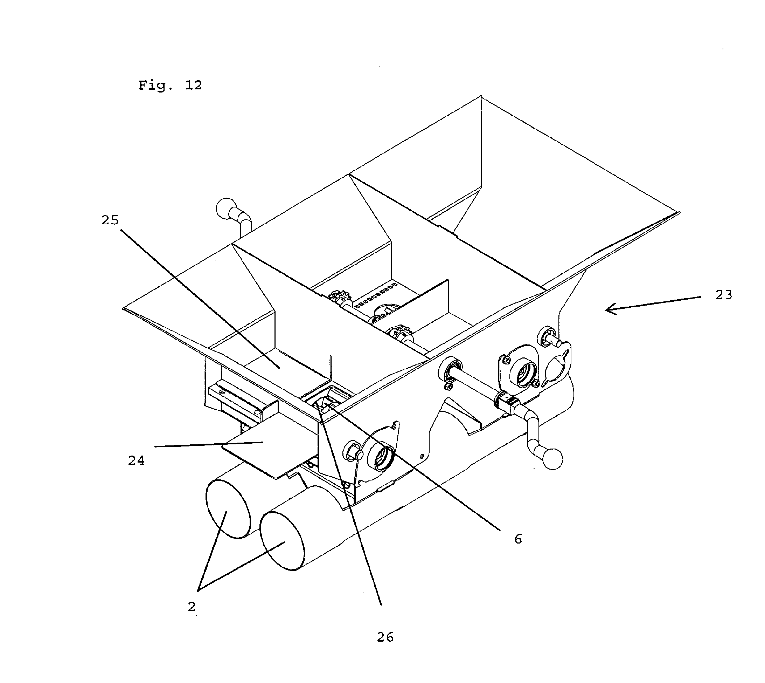

Die Fig. 9 bis 12 zeigen einen weiteren zentralen Dosierer 22. Dieser Zentraldosierer 22 weist die Absperreinrichtungen 23 auf, die als parallel zur Förderrichtung 9 verschiebbare Schieber 24, 25 ausgebildet sind. Diese Schieber 25 sind so ausgebildet, dass mittels ihnen die Materialzufuhr zu den beiden einer Förderleitung 2 zugeordneten Förderbereiche der Zellenräder 6 gleichzeitig abzudecken oder die Materialzufuhr zu den beiden einer Förderleitung 2 zugeordneten Förderbereiche der Zellenräder 6 gleichzeitig freizugeben sind. Hierzu sind in den Schiebern 24, 25 jeweils eine Durchlassöffnung 26 angeordnet, durch welche das Material zu einem einer Förderleitung 2 zugeordneten Förderbereich eines Zellenrades 6 strömen kann, wenn die Materialzufuhr zu den beiden einer Förderleitung 2 zugeordnete Zellenräder gleichzeitig freizugeben ist.

Der hintere Schieber 25 in den Fig. 9 bis 12 ist so eingestellt, dass der Schieber 25 die einer Förderleitung 2 zugeordneten Förderbereiche der Zellenräder 6 freigeben. Hierbei ist die Durchflussöffnung 26 auf der hinteren rechten Seite oberhalb des Förderbereiches des hinteren rechten Zellenrades 6 befindlich eingestellt.

Der vordere Schieber 24 ist so eingestellt, dass die Förderbereiche der der vorderen Förderleitung 2 zugeordneten Zellenräder 6 durch den Schieber 24 abgedeckt werden.

## Patentansprüche

1. Zentraldosierer für eine pneumatische Verteilmaschine mit zumindest einem in einem Gehäuse, welches unter zumindest einem Vorratsbehälter angeordnet ist, angeordneten drehbar angetriebenen und vorzugsweise als Zellenrad (6) ausgebildeten Dosierorgan (7) und zumindest einer oberhalb des Dosierorgans angeordneten Absperreinrichtung, mittels der die Zufuhr des sich im Vorratsbehälter (befindlichen ) Materials zu dem mindestens einen Zellenrad (6) absperrbar ist, wobei die Dosierorgane (7) das sich im Vorratsbehälter (1) befindliche Material über Schleusen in zumindest eine Förderleitung (2) einspeisen, **dadurch gekennzeichnet, dass** der Förderleitung (2) zwei in Förderrichtung (9) hintereinander angeordnete Dosierorgane (7) des Zentraldosierers (1, 19, 23) zugeordnet sind.

2. Zentraldosierer nach Anspruch 1, **dadurch gekennzeichnet, dass** die Absperreinrichtung als ein parallel zur Förderrichtung (9) verschiebbarer Schieber (20, 21) ausgebildet ist, dass mittels des Schiebers (20, 21) wahlweise die Materialzufuhr zu einem der beiden einer Förderleitung (2) zugeordneten Zellenräder (6) abdeckbar oder die Materialzufuhr zu den beiden einer Förderleitung zugeordneten Zellenräder (6) gleichzeitig freigebbar ist.

3. Zentraldosierer nach Anspruch 1, **dadurch gekennzeichnet, dass** die Absperreinrichtung als parallel zur Förderrichtung verschiebbarer Schieber (24, 25) ausgebildet ist, dass mittels des Schiebers (24, 25) die Materialzufuhr zu den beiden einer Förderleitung (2) zugeordneten Zellenräder (6) gleichzeitig abdeckbar oder die Materialzufuhr zu den beiden einer Förderleitung (2) zugeordneten Zellenräder (6) gleichzeitig freigebbar ist.

4. Zentraldosierer nach Anspruch 3, **dadurch gekennzeichnet, dass** in dem Schieber (24, 25) eine Durchlassöffnung (26), durch welche das Material zu dem einem Zellenrad (6) strömen kann, wenn die Materialzufuhr zu den beiden einer Förderleitung (2) zugeordneten Zellenrädern (6) gleichzeitig frei zugeben ist, angeordnet ist.

5. Zentraldosierer nach Anspruch 1, **dadurch gekennzeichnet, dass** die Absperreinrichtung als zwei gleichzeitig über eine Verstelleinrichtung parallel zur Fördereinrichtung (9) verschiebbare Schieber (11, 11', 12, 12' ) ausgebildet ist, dass die beiden Schieber (11, 11', 12, 12' ) parallel zur Förderrichtung (9) verschiebbar sind, dass mittels der Schieber (11, 11', 12, 12' ) die Materialzufuhr zu den beiden einer Förderleitung (2) zugeordneten Zellenrädern (6) gleichzeitig abdeckbar oder die Materialzufuhr zu den beiden einer Förderleitung (2) zugeordneten Zellenräder (6) gleichzeitig freigebbar ist.
